# DEMANDE DE BREVET EUROPEEN

(11) **EP 1 460 390 A2**
(43) Date de publication de la demande: **22.09.2004**
(21) Numéro de dépôt: 04300107.2
(22) Date de dépôt: 01.03.2004
(51) Int. Cl.: G01D 5/34

(54) **Dispositif optoéléctronique pour module de détection optique d'un compteur**

(30) Priorité: 04.03.2003 FR 0302643
(71) Demandeur: Actaris SAS, 92100 Boulogne (FR)
(72) Inventeur: Bulteau, Serge c/o Actaris SAS, 71031 Macon (FR)
(74) Mandataire: Feray, Valérie

(57) **Abrégé**

La présente invention concerne un dispositif optoélectronique 10 pour module de détection optique d'un compteur, en particulier compteur de fluide, par exemple d'eau, destiné à permettre le relevé à distance de la consommation de ce compteur ou des opérations équivalentes de type journalisation ou alarme. Ledit compteur comprend un élément rotatif pourvu d'un secteur réfléchissant. Ledit dispositif 10 comporte une source de front de tension Px, un élément émetteur 20 comportant une diode électroluminescente 40 émettant une impulsion de lumière en réponse à une impulsion de courant, un élément récepteur 30 et une source de tension Vdd. Ledit élément émetteur 20 comporte une capacité Ce et une résistance Rpol, ladite résistance Rpol ayant une première borne reliée à ladite source de tension Vdd et ladite capacité Ce ayant une première borne reliée à ladite source de front de tension Px et une deuxième borne reliée à la deuxième borne de ladite résistance Rpol et à l'anode de ladite diode électroluminescente 40.

## Description

La présente invention concerne un dispositif optoélectronique pour module de détection optique d'un compteur, en particulier compteur de fluide, par exemple d'eau, destiné à permettre le relevé à distance de la consommation de ce compteur ou des opérations équivalentes de type journalisation ou alarme.

Un compteur peut être muni d'un dispositif de détection optique comportant un indicateur de consommation visible formé d'un disque indicateur rotatif pourvu d'un secteur dit actif et un dispositif optoélectronique comprenant des éléments émetteurs et récepteurs en vis à vis du disque. Le signal optique reçu par l'élément récepteur est traité pour déduire un éventuel mouvement du disque selon que le signal émis par l'élément émetteur s'est réfléchi ou non sur ledit secteur actif.

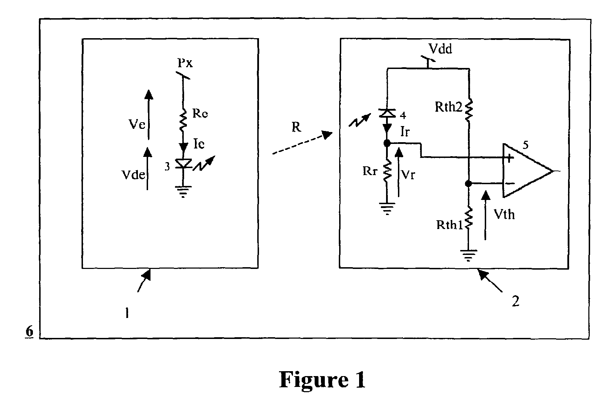

Une réalisation possible d'un tel dispositif optoélectronique 6 comportant des éléments émetteur 1 et récepteur 2 est représentée en figure 1.

L'émetteur 1 comporte :
- une diode électroluminescente 3,
- une résistance Re,
- une source d'impulsion de tension Px.

La résistance Re est reliée par l'une de ses bornes à la source Px et par son autre borne à l'anode de la diode 3.

La cathode de la diode 3 est reliée à la masse.

Le récepteur 2 comporte :
- une résistance Rr,
- une photodiode 4,
- une source de tension Vdd,
- une résistance Rth1,
- une résistance Rth2,
- un amplificateur opérationnel 5.

La source de tension Vdd est par exemple une pile au lithium, ayant une valeur de tension égale à 3V ou 3,6V.

Une impulsion de tension Px de valeur Vdd est générée, par exemple toutes les 50 ms. De cette manière, une impulsion de courant est générée à travers la diode électroluminescente 3 de façon à générer une impulsion de lumière. L'impulsion de courant est générée par une tension Ve aux bornes de la résistance Re et égale à (Vdd - Vde), où Vde est la tension de polarisation sensiblement constante aux bornes de la diode 3.

En cas de réflexion R de l'impulsion de lumière sur le secteur actif, la photodiode 4 reçoit ladite impulsion de lumière réfléchie qui est convertie en un courant Ir passant à travers la résistance Rr et produisant ainsi une tension Vr aux bornes de Rr.

Cette tension Vr est comparée à une tension de seuil Vth fixée par le pont diviseur formé par les résistances Rth1 et Rth2 et l'amplificateur opérationnel 5 fournit sur sa sortie une tension représentative de la réception de lumière sur la photodiode 4.

Toutefois, la mise en oeuvre d'un tel dispositif pose certaines difficultés.

En effet, la source de tension Vdd peut varier de façon notable à cause de différents paramètres tels que la température, le vieillissement ou l'utilisation d'impulsion de courant élevée pour d'autres applications pouvant entraîner une diminution importante de Vdd. Ainsi, la variation de Vdd peut atteindre 20%.

La tension sensiblement constante Vde de polarisation aux bornes de la diode 3 est par exemple égale à 1V ou 1,5V. L'énergie transférée vers la partie réceptrice est proportionnelle à Vdd - Vde. Ainsi, si Vdd varie de x%, l'énergie lumineuse émise va varier d'une valeur supérieure à x%.

Ainsi, si Vdd est égal à 3V et Vde est égal à 1,5V, une variation de 20% de Vdd va entraîner une variation de 40 % sur l'énergie lumineuse transmise.

Une telle variation de l'énergie lumineuse transmise non directement proportionnelle mais supérieure à la variation de Vdd rend extrêmement difficile le réglage de la tension de seuil Vth. Cette variation est d'autant plus élevée que la valeur de Vde est proche de Vdd.

La présente invention vise à fournir un dispositif optoélectronique pour module de détection optique d'un compteur comportant un élément émetteur permettant de générer une impulsion de lumière dont la variation dépend directement de la variation de la source de tension.

La présente invention propose à cet effet un dispositif optoélectronique pour module de détection optique d'un compteur, ledit compteur comprenant un élément rotatif pourvu d'un secteur réfléchissant, ledit dispositif comportant :
- une source de front de tension,
- un élément émetteur comportant une diode électroluminescente émettant une impulsion de lumière en réponse à une impulsion de courant,
- un élément récepteur,
- une source de tension,
ledit dispositif étant **caractérisé en ce que** ledit élément émetteur comporte une capacité et une résistance, ladite résistance ayant une première borne reliée à ladite source de tension et ladite capacité ayant une première borne reliée à ladite source de front de tension et une deuxième borne reliée à la deuxième borne de ladite résistance et à l'anode de ladite diode électroluminescente.

Grâce à l'invention, la résistance fait office de résistance de polarisation de la diode électroluminescente. Ainsi, en l'absence de front de tension, la diode électroluminescente est polarisée à sa tension de polarisation via la résistance reliée à la source de tension. Cette résistance est choisie suffisamment élevée pour polariser la diode avec un faible courant direct de manière à ce qu'elle n'émette sensiblement pas. Lorsqu'un front de tension de valeur Vdd est généré, une énergie égale au produit de Vdd par la valeur de la capacité est alors fournie à la diode électroluminescente qui génère une impulsion de lumière ayant une énergie lumineuse égale au produit de Vdd par la valeur de la capacité. Cette énergie lumineuse est donc proportionnelle à Vdd et une variation de Vdd entraînera une variation identique de l'énergie lumineuse transmise.

De plus, l'impulsion de lumière est générée uniquement grâce à un front de tension et non grâce à une impulsion comme c'est le cas dans le dispostif tel que représenté en figure 1. il est donc inutile de générer une impulsion de tension ayant une durée déterminée.

En outre, l'énergie transmise est indépendante de la valeur de la tension de polarisation de la diode électroluminescente ; cette dernière pouvant également légèrement varier, il est ainsi intéressant d'obtenir une énergie transmise indépendante de cette variation.

Avantageusement, la valeur de ladite résistance est choisie de manière à polariser ladite diode tout en maintenant un courant direct faible dans ladite diode.

Selon un mode de réalisation particulièrement avantageux, ledit élément récepteur comporte :
- un comparateur pour comparer la tension d'entrée dudit élément récepteur à une tension de seuil,
- une capacité de réglage dont la charge fixe la valeur de ladite tension de seuil.

Ainsi, il est facile de régler la valeur de la tension seuil, cette dernière pouvant très largement dépendre de la dispersion des composants optoélectroniques utilisés tels que la diode électroluminescente d'émission. La capacité de réglage permet d'ajuster la tension de seuil lorsque le rapport entre le niveau haut et le niveau bas du comparateur n'est pas assez grand. La tension de seuil est obtenue par une pré-charge de la capacité de réglage pendant un temps prédéterminé. Dans le cas du dispositif de l'art antérieur représenté en figure 1, la tension de seuil est fixée par un pont de résistances et une modification de la tension de seuil entraîne un surcoût important consistant à ajouter de nouvelles résistances.

Avantageusement, selon ce dernier mode de réalisation, le dispositif optoélectronique comporte des moyens pour générer un courant pendant un temps déterminé à travers ladite capacité de réglage.

Avantageusement, lesdits moyens pour générer un courant comportent un microcontrôleur.

Avantageusement, ledit élément récepteur comporte une résistance de charge, ledit comparateur comportant une entrée inverseuse et une entrée non inverseuse, ladite capacité de réglage ayant une borne reliée à ladite entrée inverseuse et ladite résistance de charge ayant une borne reliée à ladite entrée inverseuse.

Avantageusement, ledit élément récepteur comporte des moyens d'auto-adaptation pour ajuster la valeur de ladite tension seuil à la valeur de ladite tension d'entrée en présence de ladite impulsion de lumière.

De manière particulièrement avantageuse, ledit élément récepteur comporte une photodiode et une capacité pour mémoriser l'énergie transférée par ladite photodiode.

De cette manière, l'impulsion de lumière émise par l'élément émetteur peut être relativement courte, de l'ordre de quelques microsecondes ; ceci permet ainsi de limiter la consommation d'énergie. Il suffit de choisir une durée d'impulsion suffisante pour charger la capacité de mémorisation. Dans le cas du dispositif de l'art antérieur représenté en figure 1, la tension aux bornes de la résistance Rr est accessible uniquement pendant la durée de l'impulsion de lumière, cette dernière devant être choisi suffisamment longue pour permettre le traitement adéquat du signal.

Avantageusement, selon ce dernier mode de réalisation, ledit élément récepteur comporte un comparateur ayant une entrée inverseuse et une entrée non inverseuse, ladite entrée non inverseuse étant reliée à l'anode de ladite photodiode et à une des bornes de ladite capacité de mémorisation.

Le comparateur est par exemple un amplificateur opérationnel.

D'autres caractéristiques et avantages de la présente invention apparaîtront dans la description suivante d'un mode de réalisation de l'invention, donné à titre illustratif et nullement limitatif.

Dans les figures suivantes :
- La figure 1 représente un dispositif optoélectronique selon l'art antérieur,
- La figure 2 représente un dispositif optoélectronique selon l'invention.

La figure 1 a déjà été décrite en relation avec l'état de la technique.

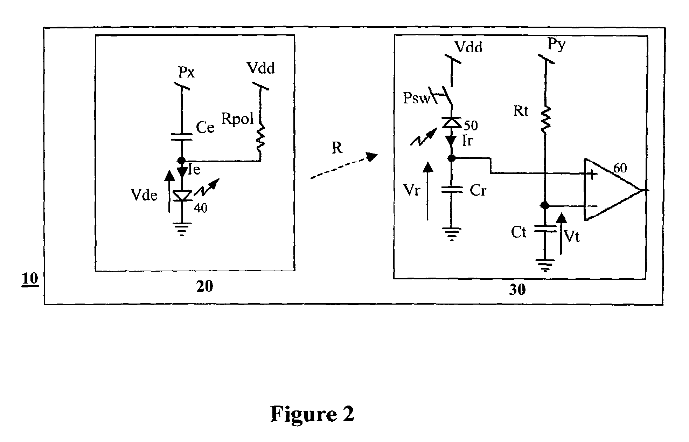

La figure 2 représente un dispositif optoélectronique 10 selon l'invention comportant un élément émetteur 20 et un élément récepteur 30.

L'élément émetteur 20 comporte :
- une diode électroluminescente 40,
- une résistance Rpol,
- une source de front de tension Px,
- une capacité Ce,
- une source de tension Vdd telle qu'une pile au lithium (3V ou 3,6V).

La capacité Ce a une borne reliée à la source de front de tension Px et une autre borne reliée à l'anode de la diode 40.

La cathode de la diode 40 est reliée à la masse.

La résistance Rpol a une borne reliée à la source de tension Vdd et une autre borne reliée à l'anode de la diode 40.

L'élément récepteur 30 comporte :
- un amplificateur opérationnel 60 ayant une entrée inverseuse et une entrée non inverseuse,
- un microcontrôleur Py,
- une capacité de réglage Ct,
- une résistance Rt,
- une capacité de mémorisation Cr,
- une photodiode 50,
- un commutateur Psw,
- la source de tension Vdd.

La résistance Rt a une borne reliée au microcontrôleur Py et une autre borne reliée à l'entrée inverseuse de l'amplificateur opérationnel 60.

La capacité de réglage Ct a une borne reliée à la masse et une autre borne reliée à l'entrée inverseuse de l'amplificateur opérationnel 60.

Le commutateur Psw a une borne reliée à la source de tension Vdd et une autre borne reliée à la cathode de la photodiode 50. Ce commutateur Psw est optionnel et peut être remplacé par un court-circuit. Le rôle du commutateur Psw est de permettre de déconnecter l'élément récepteur 30 de la source de tension Vdd lorsque l'élément émetteur 20 n'est pas en fonctionnement.

L'anode de la photodiode 50 est reliée à l'entrée non inverseuse de l'amplificateur opérationnel 60 et à une borne de la capacité de mémorisation Cr, l'autre borne de Cr étant reliée à la masse.

En l'absence de front de tension sur Px, la résistance Rpol polarise la diode 40 à sa tension directe Vde. La valeur de la résistance Rpol est choisie suffisamment élevée pour polariser la diode à Vde sans qu'il y ait d'émission de lumière.

Comme il n'y a pas de front de tension sur Px, la capacité Ce est alors polarisée entre 0V et Vde.

Lorsqu'un front de tension de valeur Vdd est émis sur Px, une énergie correspondant au produit Vdd x Ce est transférée à la diode électroluminescente 40 qui génère une impulsion de lumière.

En conséquence, l'énergie lumineuse émise est directement proportionnelle à la tension d'alimentation Vdd. Ainsi, si Vdd varie de x%, l'énergie lumineuse varie également de x%.

En cas de réflexion R de l'impulsion de lumière sur le secteur actif, la photodiode 50 reçoit ladite impulsion de lumière réfléchie qui est convertie en un courant Ir. La durée de ladite impulsion de lumière peut être très faible, de l'ordre de quelques microsecondes. En effet, il suffit que le courant Ir charge la capacité Cr. On a ainsi une mémorisation de la tension d'entrée Vr de l'élément récepteur 30 aux bornes de la capacité Cr. Cette tension Vr peut être traitée alors que l'impulsion de lumière n'est plus présente.

La tension Vr est alors comparée par l'amplificateur opérationnel à une tension de seuil Vt.

La tension de seuil Vt est obtenue en pré-chargeant la capacité Ct pendant un temps prédéfini Tt. La pré-charge peut être réalisée à l'aide du microcontrôleur Py débitant pendant Tt dans la résistance Rt en série avec la capacité Ct.

L'avantage d'un tel circuit de charge de Ct est d'offrir un ajustement programmable efficace et économique de la tension de seuil avec une bonne résolution généralement fournie par l'horloge du microcontrôleur Py.

Un autre avantage de ce circuit de charge est qu'il permet une conversion analogique numérique de la lumière reçue. En effet, on peut également mesurer le temps nécessaire pour charger la capacité Ct, initialement déchargée, avant que Vt n'atteigne la valeur de Vr. La microcontrôleur peut alors déterminer précisément la valeur de Vr et effectuer ensuite une auto-adaptation de la valeur de Vt à cette valeur de Vr.

Bien entendu, l'invention n'est pas limitée au mode de réalisation qui vient d'être décrit.

Ainsi, le comparateur tel que décrit est un amplificateur opérationnel mais il peut être remplacé par tout type de comparateur.

## Revendications

1. Dispositif optoélectronique (10) pour module de détection optique d'un compteur, ledit compteur comprenant un élément rotatif pourvu d'un secteur réfléchissant, ledit dispositif comportant :
- une source de front de tension (Px),
- un élément émetteur (20) comportant une diode électroluminescente (40) émettant une impulsion de lumière en réponse à une impulsion de courant,
- un élément récepteur (30),
- une source de tension (Vdd),
ledit dispositif (10) étant **caractérisé en ce que** ledit élément émetteur (20) comporte une capacité (Ce) et une résistance (Rpol), ladite résistance (Rpol) ayant une première borne reliée à ladite source de tension (Vdd) et ladite capacité (Ce) ayant une première borne reliée à ladite source de front de tension (Px) et une deuxième borne reliée à la deuxième borne de ladite résistance (Rpol) et à l'anode de ladite diode électroluminescente (40).

2. Dispositif optoélectronique (10) selon la revendication précédente **caractérisé en ce que** la valeur de ladite résistance (Rpol) est choisie de manière à polariser ladite diode (40) tout en maintenant un courant direct faible dans ladite diode.

3. Dispositif optoélectronique (10) selon l'une des revendications précédentes **caractérisé en ce que** ledit élément récepteur (30) comporte :
- un comparateur (60) pour comparer la tension d'entrée (Vr) dudit élément récepteur (30) à une tension de seuil (Vt),
- une capacité de réglage (Ct) dont la charge fixe la valeur de ladite tension de seuil (Vt).

4. Dispositif optoélectronique (10) selon la revendication précédente **caractérisé en ce qu'**il comporte des moyens (Py) pour générer un courant pendant un temps déterminé à travers ladite capacité de réglage (Ct).

5. Dispositif optoélectronique (10) selon la revendication 3 ou 4 **caractérisé en ce que** ledit élément récepteur (30) comporte une résistance de charge (Rt), ledit comparateur (60) comportant une entrée inverseuse et une entrée non inverseuse, ladite capacité de réglage (Ct) ayant une borne reliée à ladite entrée inverseuse et ladite résistance de charge (Rt) ayant une borne reliée à ladite entrée inverseuse.

6. Dispositif optoélectronique (10) selon la revendication 4 ou 5 **caractérisé en ce que** lesdits moyens pour générer un courant comportent un microcontrôleur.

7. Dispositif optoélectronique (10) selon l'une des revendications 3 à 5 **caractérisé en ce que** ledit élément récepteur (30) comporte des moyens d'auto-adaptation pour ajuster la valeur de ladite tension seuil à la valeur de ladite tension d'entrée en présence de ladite impulsion de lumière.

8. Dispositif optoélectronique (10) selon l'une des revendications précédentes **caractérisé en ce que** ledit élément récepteur (30) comporte une photodiode (50) et une capacité (Cr) pour mémoriser l'énergie transférée par ladite photodiode (50).

9. Dispositif optoélectronique (10) selon la revendication précédente **caractérisé en ce que** ledit élément récepteur (30) comporte un comparateur (60) ayant une entrée inverseuse et une entrée non inverseuse, ladite entrée non inverseuse étant reliée à l'anode de ladite photodiode (50) et à une des bornes de ladite capacité de mémorisation (Cr).
